# EUROPÄISCHE PATENTSCHRIFT

(11) **EP 1 278 998 B1**
(45) Veröffentlichungstag und Bekanntmachung des Hinweises auf die Patenterteilung: **01.12.2004**
(21) Anmeldenummer: 01942983.6
(22) Anmeldetag: 30.04.2001
(51) Int. Cl.: G01B 5/004

(54) **VORRICHTUNG ZUM MESSEN ÜBER MEHRERE ACHSEN AN EINEM GEGENSTAND**
DEVICE FOR MEASURING AN OBJECT ACROSS SEVERAL AXES
DISPOSITIF DE MESURE D'UN OBJET SELON PLUSIEURS AXES

(30) Priorität: 03.05.2000 DE 20007799 U; 20.12.2000 DE 20021650 U
(43) Veröffentlichungstag der Anmeldung: 29.01.2003
(73) Patentinhaber: Komeg Industrielle Messtechnik GmbH, 66333 Völklingen (DE)
(72) Erfinder: HAAGE, Klaus, 66333 Völklingen (DE); LAUER, Josef, 66346 Püttlingen (DE)
(74) Vertreter: Wieske, Thilo
(86) Internationale Anmeldenummer: PCT/DE2001/001613
(87) Internationale Veröffentlichungsnummer: WO 2001/084072

(56) Entgegenhaltungen:
- EP-A- 0 836 078
- DE-A- 3 930 463
- US-A- 1 615 668
- PATENT ABSTRACTS OF JAPAN vol. 1999, no. 03, 31. März 1999 (1999-03-31) & JP 10 333050 A (NIKON CORP), 18. Dezember 1998 (1998-12-18)
- PATENT ABSTRACTS OF JAPAN vol. 1998, no. 06, 30. April 1998 (1998-04-30) & JP 10 039230 A (NIKON CORP), 13. Februar 1998 (1998-02-13)

## Beschreibung

Die Erfindung betrifft eine Vorrichtung zum Messen über mehrere Achsen an einem Gegenstand, wobei der zu vermessende Gegenstand auf einem Messtisch festlegbar ist.

Vorrichtungen dieser Art sind bekannt, vergleiche beispielsweise die Zeitschrift "Kontrolle" 10/96, Seite 12 ff. und 9/97. Der dabei vorgesehene Messtisch ist im wesentlichen eine optisch durchlässige Platte, die üblicherweise in zwei Richtungen während des Messvorganges bewegbar ist. Der Messvorgang läuft mit hoher Geschwindigkeit ab, weshalb an dem Messtisch und dem darauf fixierten zu vermessenden Gegenstand relativ hohe Beschleunigungskräfte auftreten. Ist wie üblich der zu vermessende Gegenstand beispielsweise mit einer Knetmasse auf dem Messtisch befestigt, so kann es wegen der hohen Beschleunigungskräfte vorkommen, dass der Gegenstand während der Messung seine Lage verändert und damit die Messung unbrauchbar ist.

Für taktiles Messen sind auch entsprechende Vorrichtungen bekannt (Katalog "Mitutoyo - Präzisionsmesstechnik" 1. Auflage 5/99, Seite A1 - A14). Bei diesen bekannten Koordinatenmeßgeräten gibt es die verschiedensten Aufspannsysteme, um ein zu vermessendes Werkstück festzulegen. Es besteht seitens der Anwender solcher Geräte der Wunsch, noch einfacher und schneller Werkstücke aufspannen zu können.

Der Erfindung liegt die Aufgabe zugrunde, bei einer Vorrichtung der eingangs näher bezeichneten Art den zu vermessenden Gegenstand auf dem Messtisch schnell und sicher so zu fixieren, dass er während des gesamten Messvorganges seine Lage nicht verändern kann, selbst bei bewegbarem Messtisch.

Diese Aufgabe wird erfindungsgemäß bei einer Vorrichtung zum berührungslosen optischen Messen über mehrere Achsen an einem Gegenstand so gelöst, dass in der Messebene befestigbare Basisleisten vorgesehen sind, die seitlich als halbes Schwalbenschwanzprofil ausgebildet sind, dass dazu passende mit einer Nut versehene Anbauleisten vorgesehen sind, die an einer Seite ein Zahnprofil aufweisen und der Nut Feststellschrauben zugeordnet sind, dass die Basisleisten und die Anbauleisten so bemessen und zu dem Messtisch angeordnet sind, dass die Ebene des Messtisches für die Unterseite der Anbauleisten als Bezugsebene dient, und dass ein den Gegenstand fixierendes Spannstück vorgesehen ist.

Eine weitere Ausbildung der Erfindung besteht darin, dass die Basisleisten auf zwei Seiten das halbe Schwalbenschwanzprofil aufweisen.

Erfindungsgemäß ist auch vorgesehen, dass die Feststellschrauben zur Vertikalen geneigt angeordnet sind.

Die besagte Aufgabe wird bei einer Vorrichtung zum taktilen Messen über mehrere Achsen an einem Gegenstand so gelöst, dass in der Messebene befestigbare Basisleisten vorgesehen sind, die seitlich als halbes Schwalbenschwanzprofil ausgebildet sind, dass dazu passende mit einer Nut versehene Anbauplatten vorgesehen sind, die an der Oberseite ein Bohrbild aufweisen und der Nut Feststellschrauben zugeordnet sind, dass die Basisleisten und die Anbauplatten so bemessen und zu dem Messtisch angeordnet sind, dass die Ebene des Messtisches für die Unterseite der Anbauplatten als Bezugsebene dient, und dass ein den Gegenstand fixierendes Spannstück vorgesehen ist.

Die mit der Erfindung erzielten Vorteile bestehen insbesondere darin, dass zu vermessende Gegenstände sicher aber auch schnell auf dem Messtisch festgelegt werden können, selbst wenn er bewegbar ist.

Die Erfindung wird anhand der Zeichnungen näher erläutert.

Es zeigt ein Ausführungsbeispiel für den Fall berührungslosen optischen Messens
Fig. 1 perspektivisch eine Basisleiste mit angesetzter Anbauleiste,
Fig. 2 diese beiden Leisten im Schnitt und
Fig. 3 einen Messtisch mit verschiedenen Basis- und Anbauleisten sowie einen zu vermessenden Gegenstand und einem Spannstück.

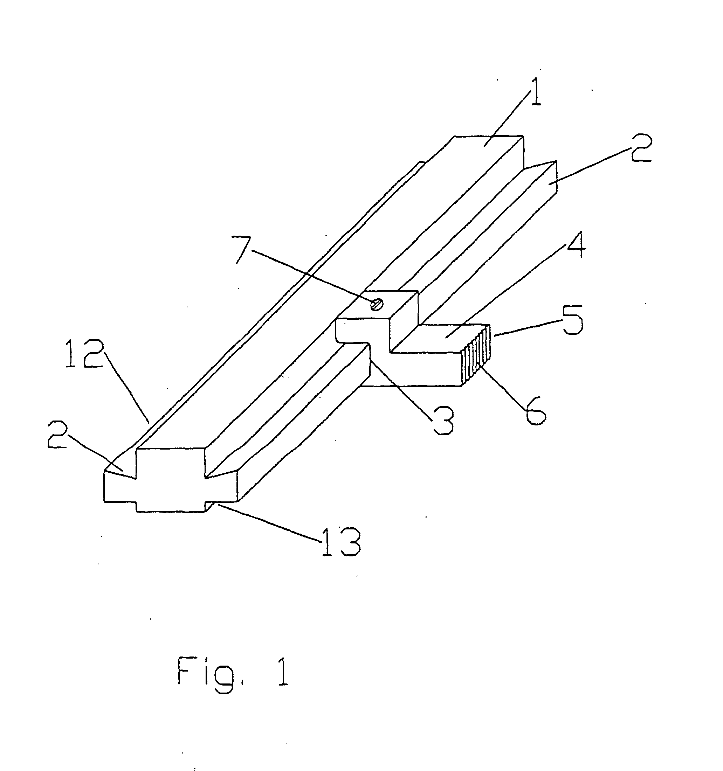

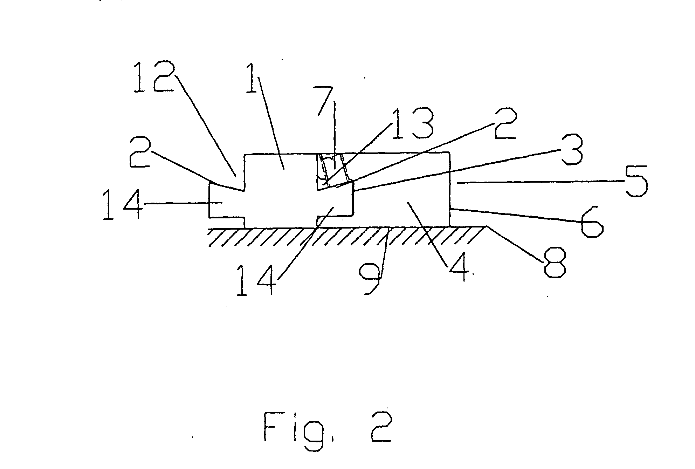

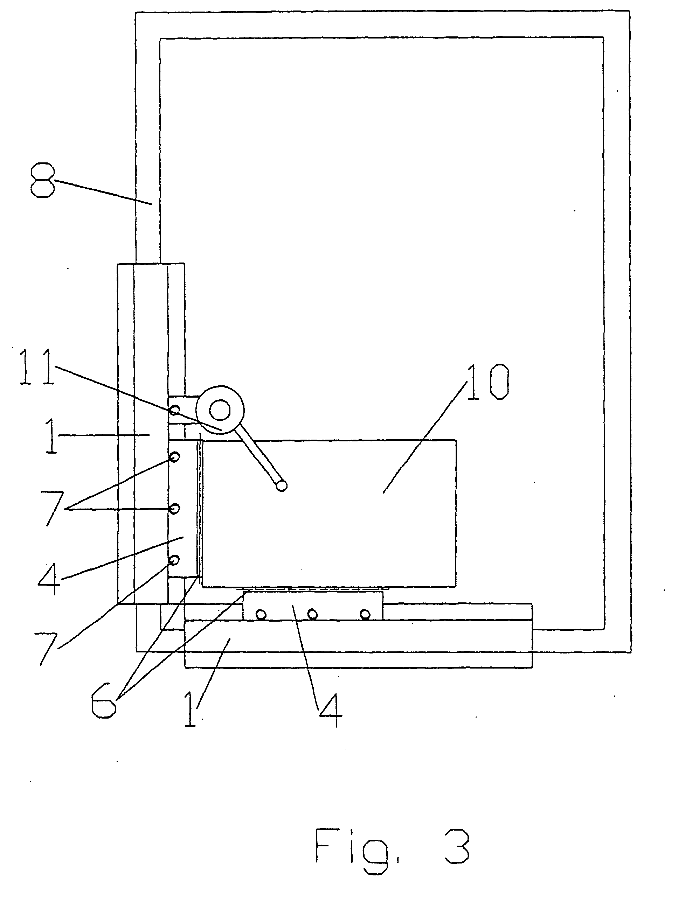

Ein anderes Ausführungsbeispiel für taktiles Messen zeigt
Fig. 1A perspektivisch eine Basisleiste mit angesetzter Anbauplatte,

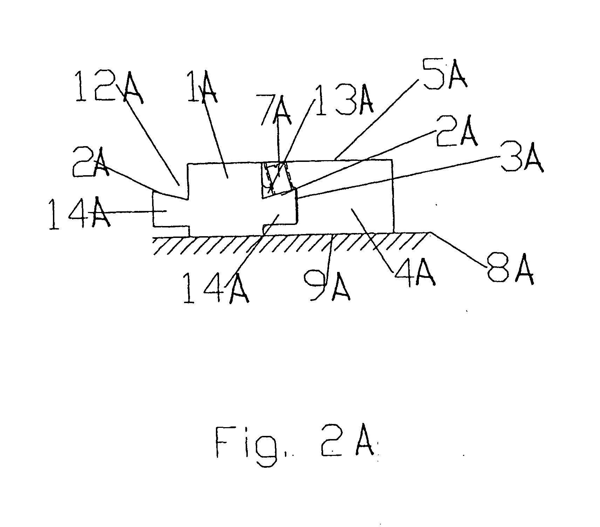

Fig. 2A diese beiden Leisten im Schnitt und

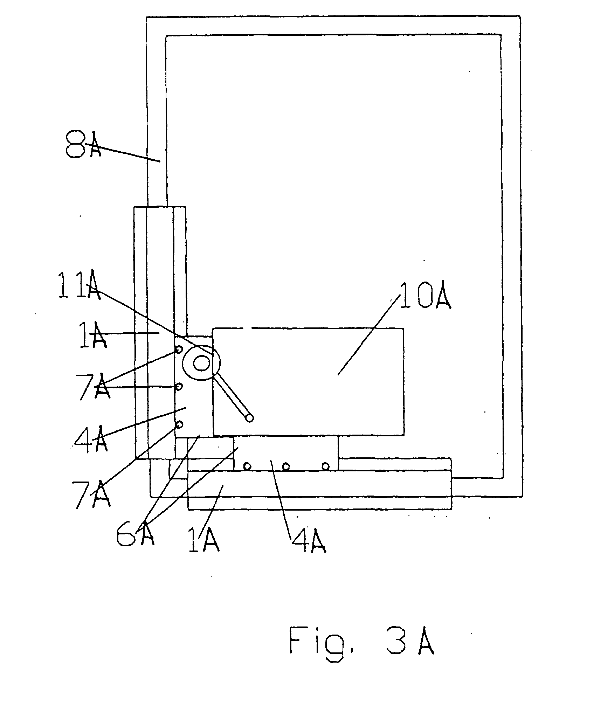

Fig. 3A einen Messtisch mit verschiedenen Basis- und Anbauplatten sowie einen zu vermessenden Gegenstand und einem Spannstück.

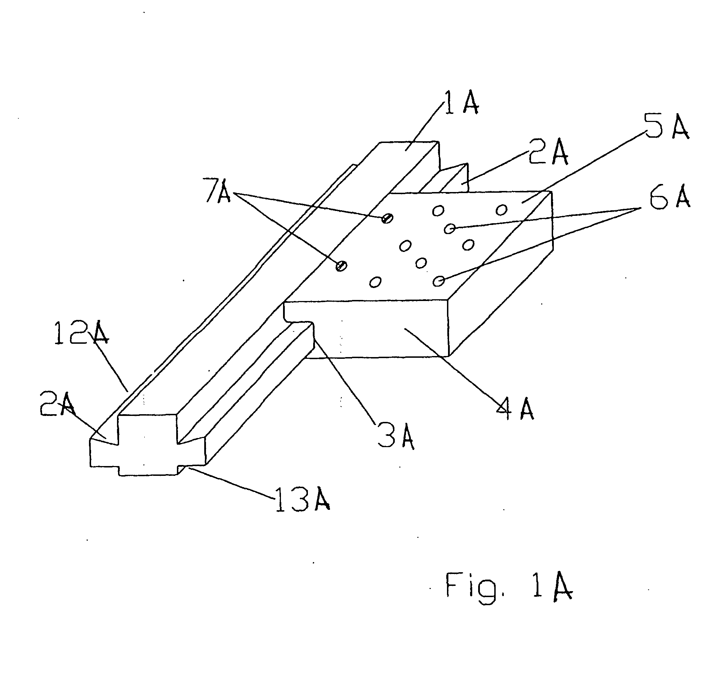

Anhand der Fig. 1 und 2 wird das erfindungsgemäße Prinzip von Basisleisten 1 und dazu passenden Anbauleisten 4 deutlich. Die Basisleisten 1 sind seitlich, vorzugsweise auf beiden Seiten 12 und 13, als halbes Schwalbenschwanzprofil 2 ausgebildet. Das heißt, die Zunge 14 der Basisleisten 1 ist nur auf ihrer Oberseite schräg ausgebildet. Die Anbauleisten 4 weisen eine zu dem halben Schwalbenschwanzprofil 2 passende Nut 3 auf. An einer Seite 5 weist die Anbauleiste 4 ein Zahnprofil 6 auf, das zur Realisierung des berührungslosen optischen Messens dient. In der Verbindung von Anbauleisten 4 an Basisleisten 1 dienen Feststellschrauben 7, die zur Senkrechten so geneigt angeordnet sind, dass ein optimales Festklemmen an der Oberseite der Zunge 14 möglich ist.

Die Basisleisten 1 und die Anbauleisten 4 sind so bemessen und zu dem Messtisch 8 angeordnet, dass die Ebene des Messtisches 8 für die Unterseite 9 der Anbauleisten 4 als Bezugsebene dient. Das bedeutet, dass beim Zusammenfügen von Anbauleisten 4 mit Basisleisten 1 die Ebene des Messtisches 8 sozusagen als Führung für die an die Basisleisten 1 heranzuschiebenden Anbauleisten 4 dient, wodurch ein schneller und sicherer Aufbau des Messplatzes möglich ist.

In Fig. 3 ist mit 8 der bewegliche Messtisch bezeichnet. 1 sind Basisleisten, an denen mit Hilfe von Feststellschrauben 7 Anbauleisten 4 befestigt sind. 10 ist ein zu vermessender Gegenstand, der mit Hilfe eine Spannstückes 11 gegen zwei gezahnte Anbauleisten 4 gedrückt wird. So ergibt sich, im Gegensatz zu den bekannten Lösungen (mit Knetmasse) ein sicheres Fixieren eines zu vermessenden Gegegenstandes 10 auf dem bewegbaren Messtisch auch für hohe Messgeschwindigkeiten und damit große auftretende Beschleunigungskräfte.

Die Erfindung kann bei allen Vorrichtungen der eingangs näher bezeichneten Art eingesetzt werden, gleich, ob über zwei Achsen oder dreidimensional gemessen werden soll.

Anhand der Fig. 1A und 2A wird das erfindungsgemäße Prinzip von Basisleisten 1A und dazu passenden Anbauplatten 4A bei taktilem Messen deutlich. Die Basisleisten 1A sind seitlich, vorzugsweise auf beiden Seiten 12A und 13A, als halbes Schwalbenschwanzprofil 2A ausgebildet. Das heißt, die Zunge 14A der Basisleisten 1A ist nur auf ihrer Oberseite schräg ausgebildet. Die Anbauplatten 4A weisen eine zu dem halben Schwalbenschwanzprofil 2A passende Nut 3A auf. Auf der Oberseite 5A weist die Anbauplatte 4A ein Bohrbild 6A auf, das zur Aufnahme der zu vermessenden Werkstücke dient. Zur Verbindung von Anbauplatten 4A an Basisleisten 1A dienen Feststellschrauben 7A, die zur Senkrechten so geneigt angeordnet sind, dass ein optimales Festklemmen an der Oberseite der Zunge 14A möglich ist.

Die Basisleisten 1A und die Anbauplatten 4A sind so bemessen und zu dem Messtisch 8A angeordnet, dass die Ebene des Messtisches 8A für die Unterseite 9A der Anbauplatten 4A als Bezugsebene dient. Das bedeutet, dass beim Zusammenfügen von Anbauplatten 4A mit Basisleisten 1A die Ebene des Messtisches 8A sozusagen als Führung für die an die Basisleisten 1A heranzuschiebenden Anbauplatten 4A dient, wodurch ein schneller und sicherer Aufbau des Messplatzes möglich ist.

In Fig. 3A ist mit 8A der Messtisch bezeichnet. 1A sind Basisleisten, an denen mit Hilfe von Feststellschrauben 7A Anbauplatten 4A befestigt sind. 10A ist ein zu vermessender Gegenstand, der mit Hilfe eine Spannstückes 11A gegen zwei Anbauplatten 4A gedrückt wird. So ergibt sich, im Gegensatz zu den bekannten Lösungen ein sicheres Fixieren eines zu vermessenden Gegegenstandes 10A auf dem Messtisch 8A. Das Spannstück 11A ist in einer der Bohrungen des Bohrbildes 6A befestigt (eingeschraubt).

## Patentansprüche

1. Vorrichtung zum Messen über mehrere Achsen an einem Gegenstand, wobei der zu vermessende Gegenstand auf einem Messtisch festlegbar ist, **dadurch gekennzeichnet, dass** in der Messebene befestigbare Basisleisten (1) vorgesehen sind, die seitlich als halbes Schwalbenschwanzprofil (2) ausgebildet sind, dass dazu passende mit einer Nut (3) versehene Anbauleisten (4) vorgesehen sind, die bei einem bewegbaren, optisch durchlässigen Messtisch (8) an einer Seite (5) ein Zahnprofil (6) aufweisen und der Nut (3) Feststellschrauben (7) zugeordnet sind, dass die Basisleisten (1) und die Anbauleisten (4) so bemessen und zu dem Messtisch (8) angeordnet sind, dass die Ebene des Messtisches (8) für die Unterseite (9) der Anbauleisten (4) als Bezugsebene dient, und dass ein den Gegenstand (10) fixierendes Spannstück (11) vorgesehen ist.

2. Vorrichtung zum Messen über mehrere Achsen an einem Gegenstand, wobei der zu vermessende Gegenstand auf einem Messtisch festlegbar ist, **dadurch gekennzeichnet, dass** in der Messebene befestigbare Basisleisten (1A) vorgesehen sind, die seitlich als halbes Schwalbenschwanzprofil (2A) ausgebildet sind, dass dazu passende mit einer Nut (3A) versehene Anbauplatten (4A) vorgesehen sind, die bei taktilem Messen an der Oberseite (5A) ein Bohrbild (6A) aufweisen und der Nut (3A) Feststellschrauben (7A) zugeordnet sind, dass die Basisleisten (1A) und die Anbauplatten (4A) so bemessen und zu dem Messtisch (8A) angeordnet sind, dass die Ebene des Messtisches (8A) für die Unterseite (9A) der Anbauplatten (4A) als Bezugsebene dient, und dass ein den Gegenstand (10A) fixierendes Spannstück (11A) vorgesehen ist.

3. Vorrichtung nach Anspruch 1, **dadurch gekennzeichnet, dass** die Basisleisten (1) auf zwei Seiten (12, 13) das halbe Schwalbenschwanzprofil (2) aufweisen.

4. Vorrichtung nach Anspruch 1, **dadurch gekennzeichnet, dass** die Feststellschrauben (7) zur Vertikalen geneigt angeordnet sind.

5. Vorrichtung nach Anspruch 2, **dadurch gekennzeichnet, dass** die Basisleisten (1A) auf zwei Seiten (12A, 13A) das halbe Schwalbenschwanzprofil (2A) aufweisen.

6. Vorrichtung nach Anspruch 2, **dadurch gekennzeichnet, dass** die Feststellschrauben (7A) zur Vertikalen geneigt angeordnet sind.

## Claims

1. Device for measuring an object across several axes, said object to be measured being fixable on a measuring table, **characterised in that** there are provided base members (1) which are securable in the measuring plane and are configured laterally as a half-dovetail profile (2), attachment members (4) which complement the base members and are provided with a groove (3) and which have a toothed profile (6) on one side (5) when intended for use with a moveable, optically transparent measuring table (8), and fastening screws (7) which are assigned to the groove (3), and **in that** the base members (1) and the attachment members (4) are so dimensioned and arranged relative to the measuring table (8) that the plane of the measuring table (8) serves as a reference plane for the underside (9) of the attachment members (4), and **in that** a clamping element (11) is provided for securing the object (10).

2. Device for measuring an object across several axes, said object to be measured being fixable on a measuring table, **characterized in that** there are provided base members (1A) which are securable in the measuring plane and configured laterally as a half-dovetail profile (2A), attachment plates (4A) which complement the base members and and are provided with a groove (3A) and which have a hole pattern (6A) on the top side (5A) when intended for use in tactile measuring operations, and fastening screws (7A) which are assigned to the groove (3A), and **in that** the base members (1A) and the attachment plates (4A) are so dimensioned and arranged relative to the measuring table (8A) that the plane of the measuring table (8A) serves as a reference plane for the underside (9A) of the attachment plates (4A), and **in that** a clamping element (11A) is provided for securing the object (10).

3. Device according to claim 1, **characterised in that** the base members (1) have the half-dovetail profile (2) on two sides (12,13).

4. Device according to claim 1, **characterised in that** the fastening screws (7) are inclined relative to the vertical.

5. Device according to claim 2, **characterised in that** the base members (1A) have the half-dovetail profile (2A) on two sides (12A, 13A).

6. Device according to claim 2, **characterised in that** the fastening screws (7A) are inclined relative to the vertical.

## Revendications

1. Dispositif de mesure d'un objet selon plusieurs axes, l'objet à mesurer pouvant être fixé à plat sur une table de mesure, **caractérisé en ce que** des listeaux de base (1) ayant la forme sur le côté d'un profilé en demi-queue d'aronde (2) peuvent être fixés dans la surface de mesure, **en ce qu'**il est prévu des listeaux portés (4) adaptés auxdits listeaux de base et munis d'une gorge (3), qui sont munis sur un côté (5) d'une denture (6) lorsqu'ils sont utilisés avec une table de mesure (8) mobile et transparente optiquement, et des vis de blocage (7) étant associées à la gorge (3), **en ce que** les listeaux de base (1) et les listeaux portés (4) sont dimensionnés et disposés sur la table de mesure (8) de telle sorte que le plan de la table de mesure (8) sert de plan de référence à la face inférieure (9) des listeaux portés (4), et **en ce qu'**un tendeur (11) est prévu pour fixer l'objet (10).

2. Dispositif de mesure d'un objet selon plusieurs axes, l'objet à mesurer pouvant être fixé à plat sur une table de mesure, **caractérisé en ce que** des listeaux de base (1A) ayant la forme sur le côté d'un profilé en demi-queue d'aronde (2A) peuvent être fixés dans la surface de mesure, **en ce qu'**il est prévu des listeaux portés (4A) adaptés auxdits listeaux de base et munis d'une gorge (3A), qui sont munis d'un réseau de trous (6A) sur la face supérieure (5A) lorsqu'ils sont utilisés pour des mesures tactiles, et de vis de blocage (7A) étant associés à la gorge (3A), **en ce que** les listeaux de base (1A) et les listeaux portés (4A) sont dimensionnés et disposés sur la table de mesure (8A) de telle sorte que le plan de la table de mesure (8A) sert de plan de référence à la face inférieure (9A) des listeaux portés (4A), et **en ce qu'**un tendeur (11A) est prévu pour fixer l'objet (10A).

3. Dispositif selon la revendication 1, **caractérisé en ce que** les listeaux de base (1) sont munis des deux côtés du profilé en demi-queue d'aronde.

4. Dispositif selon la revendication 1, **caractérisé en ce que** les vis de blocage (7) sont inclinées par rapport à la verticale.

5. Dispositif selon la revendication 2, **caractérisé en ce que** les listeaux de base (1A) sont munis des deux côtés du profilé en demi-queue d'aronde.

6. Dispositif selon la revendication 2, **caractérisé en ce que** les vis de blocage (7A) sont inclinées par rapport à la verticale.
